# EUROPEAN PATENT SPECIFICATION

(11) **EP 3 269 528 B1**
(45) Date of publication and mention of the grant of the patent: **16.09.2020**
(21) Application number: 15884617.0
(22) Date of filing: 12.03.2015
(51) Int. Cl.: B29C 49/04, B29C 49/14, B29B 11/10, B29B 11/14

(54) **CONTAINER HAVING SPIRAL RIDGES ON INNER SURFACE THEREOF, METHOD FOR MANUFACTURING THE CONTAINER AND APPARATUS FOR MANUFACTURING SAME**
BEHÄLTER MIT INNEREN ERHÖHTEN SPIRALEN, VERFAHREN ZUR HERSTELLUNG DES BEHÄLTERS UND VORRICHTUNG ZUR HERSTELLUNG DAVON
RÉCIPIENT PRÉSENTANT NERVURES INTÉRIEURES EN SPIRALE, PROCÉDÉ DE FABRICATION DU RÉCIPIENT ET APPAREIL POUR SON FABRICATION

(43) Date of publication of application: 17.01.2018
(73) Proprietor: Daisho Glass Co., Ltd., Osaka-shi, Osaka 536-0014 (JP); Giver Life Co., Ltd., Kadoma-shi, Osaka 571-0041 (JP)
(72) Inventor: TOKU, Yoichi, Osaka-shi Osaka 536-0014 (JP); UNO, Masaru, Kadoma-shi Osaka 571-0041 (JP)
(74) Representative: Plougmann Vingtoft a/s
(86) International application number: PCT/JP2015/057344
(87) International publication number: WO 2016/143129

(56) References cited:
- EP-A1- 1 356 915
- WO-A1-2014/175311
- JP-A- 2003 139 003
- JP-A- 2010 005 990
- JP-A- 2014 162 018
- US-A1- 2006 097 432
- DATABASE WPI Week 201064 Thomson Scientific, London, GB; AN 2010-L72348 XP002784093, -& JP 2010 201629 A (DAISHO GLASS CO LTD) 16 September 2010 (2010-09-16)
- DATABASE WPI Week 198451 Thomson Scientific, London, GB; AN 1984-316180 XP002784094, -& JP S59 199217 A (EXCEL CORP) 12 November 1984 (1984-11-12)
- DATABASE WPI Week 201008 Thomson Scientific, London, GB; AN 2010-A57530 XP002784095, -& JP 2010 005990 A (YOSHINO KOGYOSHO KK) 14 January 2010 (2010-01-14)

## Description

### TECHNICAL FIELD

The present invention relates to a container having spiral ridges on an inner surface thereof, a process for producing the same, and a machine for producing the same.

### BACKGROUND ART

A conventional direct blow molding machine is equipped with a parison-forming die (hereinafter simply called a die) for extruding a molten thermoplastic resin into a tubular parison, a core disposed at the center of the opening of the die for discharging the thermoplastic resin, and a container mold for closing one end of the parison and holding the parison while the parison is inflated into a container shape (see, for example, Patent Literature 1).

Patent Literature 1 proposed the formation of raised ridges (ribs) on an inner surface of a container by using a core having grooves on its surface. The grooves extend along the axial direction of the core. At the time of extrusion of a parison from the die, the raised linear ridges extending along the axial direction are formed on an inner surface of the parison by the grooves. The parison is then held in the container mold and inflated into a container shape. In this manner, a container having the raised linear ridges on an inner surface thereof is produced.

### CITATION LIST

### PATENT LITERATURE

Patent Literature 1: JP H01-18846 B

US 2006/097432 A1 discloses a multiple cavity bottle is manufactured by injection molding a preform having a helical septum and blow molding the preform to create a bottle having a helical septum separating the bottle into two cavities. The helical septum is molded with a twist sufficient to accommodate a contact point size for stretch rods used in blow molding. Blow molding is then accomplished by inserting at least two stretch rods from the top end of the preform to the contact points, heating the preform to a softening temperature, extending the stretch rods to stretch the preform and introducing gas pressure into the preform to stretch a blow molding portion into a final bottle shape within a mold.

EP 1 356 915 A1 discloses a method of making a laminated bottle (20) having an outer layer (20b) and an inner layer (20c) laminated on an inner surface of the outer layer (20b) so as to be capable of delaminating from the surface. In the method at least one ventilation hole (20d) is formed at the step of injection molding of the outer preform (7A) to allow ambient air to flow in between the outer and inner layers (20b, 20c) and that when the inner preform (7B) is subsequently injection molded, at least one pin is inserted from outside and through the outer preform (7A) into the ventilation hole (20d) in such a manner that an end portion of the at least one pin (23) is held substantially in flush with the inner surface of the outer preform (7A).

JP 2010 201629 A discloses A direct blow molding apparatus 1 has a parison forming die 8 extruding molten thermoplastic resin 3 into a tubular shape to form a parison 4. The parison forming die 8 includes a mandrel 18 serving as a shaft mold when extruding the molten thermoplastic resin 3 into the tubular shape, and a parison forming die body 20 surrounding the periphery of the mandrel 18 by providing an annular path 19. In an outer periphery 35 of the mandrel 18A, a recessed groove 36 for forming the protrusion 407 on the inner periphery 406 of the parison 4 is formed which extends in the axial direction A1 of the mandrel 18. A first air path 22 penetrating through the inside of the mandrel 18 and for blowing a gas stream into the parison 4 via the recessed groove 36 is formed in the mandrel 18. Consequently, the molten thermoplastic resin 3 easily flows through the recessed groove 36.

S59 199217 A discloses a preparation of hollow molded article having twist part. A molten stock material reaching a nozzle 3 is injected as a cylindrical parison from a nozzle extrusion orifice 3a while the lower end part of the parison 6 is grasped by the arm 7a of a grasping member 7 which is, in turn, rotated to the direction shown by an arrow only over a predetermined angle by a driving means. In the next step, the twisted parison is cooled to a self-holdable temp. while held under a twisted state by a predetermined method to obtain a hollow molded article having a twist part.

WO 2014/175311 a parison supply device (1) for continuously supplying parison sections (Ps) of a specified length from a parison (P) discharged from an extrusion die (10) to a blow molding die, wherein: the device is provided with multiple tension chucks (2) and a tension chuck-moving unit (3) for moving the multiple tension chucks (2); the tension chuck-moving unit (3) causes the individual tension chucks (2A, 2B) to perform the repeated action of grasping the parison (P) at a first position (I) near the extrusion die (10) and moving to a second position (II) separated from the extrusion die (10); and after the following tension chuck (2B) grasps the parison (P) at the first position (I) before the preceding tension chuck (2A) is separated from the extrusion die (10) by a set distance (L) at the second position (II), the parison section is supplied to the blow molding die.

### SUMMARY OF INVENTION

### TECHNICAL PROBLEM

The conventional direct blow molding machines are capable of forming the raised linear ridges extending along the axial direction on an inner surface of a container, but incapable of forming the raised spiral ridges (hereinafter called spiral ridges) on an inner surface of a container. The conventional core having grooves that extend in a direction inclined from the axis could conceivably be used to form the spiral ridges. In this case, however, as the length of the parison hanging from the die increases during the extrusion from the die, the parison will sag due to its own weight, causing the spiral ridges to be stretched in the axial direction and resulting in the collapse of the shape of the spiral ridges. Thus, conventionally, it was impossible to form the spiral ridges with a desired shape on an inner surface of a container.

The present invention was made in view of the above problem. An object of the present invention is therefore to provide a process for producing a container having spiral ridges with a desired shape, and a machine for producing the container.

### SOLUTION TO PROBLEM

A first aspect of the present invention relates to a process in accordance with claim 1.

A second aspect of the present invention relates to a machine in accordance with claim 3.

A third aspect of the present disclosure relates to a container having spiral ridges on an inner surface thereof, the container comprising
spiral ridges formed on an inner surface of the container, and
a mouth formed at the container's top,
the spiral ridges being formed by extruding a tubular parison from a die that forms raised ridges on an inner surface of the parison, while cooling the inner surface of the parison, and twisting the parison hanging from the die and the raised ridges on the parison,
the mouth having an open end plane that is a flat plane formed only by cutting off the parison hanging from the die after extrusion of the parison from the die and formation of the spiral ridges.

### ADVANTAGEOUS EFFECTS OF INVENTION

According to the first and second aspects of the present invention, the tubular parison hanging from the parison-forming die is clamped, and rotated around the axis of the parison while the parison is kept clamped. By this rotation, the parison is twisted in the circumferential direction. Due to this twisting process, the raised ridges on the inner surface of the parison are twisted into spiral ridges. The parison having the spiral ridges is then inflated from the inside thereof to give a container having the spiral ridges on an inner surface thereof.

According to the first and second aspects of the present invention, the spiral ridges have not yet been formed at the time of obtaining the parison hanging from the die after extrusion from the die, and therefore there is no need to be concerned about the collapse of the shape of the spiral ridges, which would result from sagging of the parison in the axial direction due to its own weight. The parison hanging from the die is gripped at the bottom and then twisted. In this way, the spiral ridges beautifully twisted around the axis of the parison are provided over the entire parison.

According to the third aspect of the present invention, there is no need for flattening the open end plane of the mouth of the container having the spiral ridges on the inner surface thereof by means of cutting and the like, and therefore there is no need for concern that burr removed by cutting and the like falls into the container.

### BRIEF DESCRIPTION OF DRAWINGS

Fig. 1 shows a vertical sectional view of a container having spiral ridges on an inner surface thereof.
Figs. 2a to 2c show schematic views of a machine for producing a container having spiral ridges on an inner surface thereof according to an embodiment of the present invention. Fig. 2a shows a parison forming device, Fig. 2b shows a spiral ridge forming device, and Fig. 2c shows a container forming device.
Fig. 3 shows a sectional view of the principal part of the parison forming device.
Fig. 4 shows a sectional view taken along the line IV-IV shown in Fig. 3.
Fig. 5 shows a plan view of a grooved member shown in Fig. 3, which is not mounted on the device.
Fig. 6 shows a schematic view of the spiral ridge forming device.
Figs. 7a and 7b show a spiral ridge forming unit of the spiral ridge forming device. Fig. 7a shows a front view and Fig. 7b shows a side view.
Fig. 8 shows a schematic view of a machine for producing a container having spiral ridges on an inner surface thereof, showing a parison forming step and a spiral ridge forming step.
Fig. 9 shows a schematic view of a machine for producing a container having spiral ridges on an inner surface thereof, showing a container forming step.

### DESCRIPTION OF EMBODIMENTS

Embodiments of the present invention will be described below in detail with reference to the attached drawings.

### [Container having spiral ridges on an inner surface thereof]

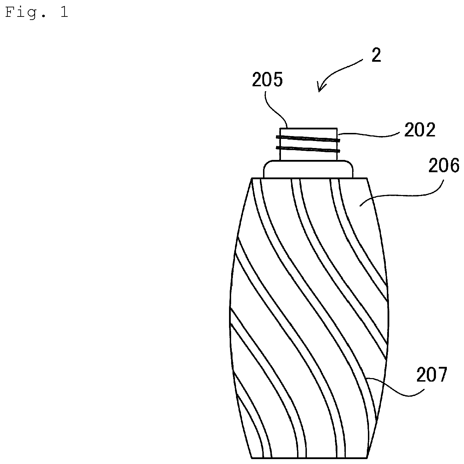

Fig. 1 shows a vertical sectional view of a container 2 having spiral ridges on an inner surface thereof (hereinafter simply called container 2). The container 2 has a hollow cylindrical shape with a bottom, and has a mouth 202 at the top. The mouth 202 has a male thread on the outer peripheral surface thereof.

The container 2 is swollen in the middle, toward the direction perpendicular to the axial direction, as compared with both axial ends thereof. The container 2 has an outer peripheral surface and an inner peripheral surface 206, and a plurality of spiral ridges 207 (raised spiral ridges) are formed only on the inner peripheral surface 206. The plurality of spiral ridges 207 are arranged at approximately equal intervals in the circumferential direction of the container 2.

The container 2 is suitable for a container to hold a cosmetic product, a pharmaceutical product and the like. For example, since the outer peripheral surface of the container 2 has no raised ridges, a label is easily attached to the outer peripheral surface. In cases where the container 2 is transparent or translucent, the spiral ridges 207 on the inner peripheral surface 206 of the container 2 are visible from the outside, which enhances the appearance of the container 2 and makes the product containing the container 2 stand out. Another advantage is that the spiral ridges 207 can serve as a reinforcement for the container 2.

The mouth 202 of the container 2 has an open end plane 205, which is a flat plane that is perpendicular to the axial direction. The flat plane is formed only by cutting off, from a die, a parison 4 to be formed into the container 2. Therefore, unlike the conventional technique, there is no need for flattening the open end plane 205 of the mouth 202 by means of cutting off and the like, and thus there is no need for concern that burr removed by cutting off and the like falls into the container 2. The cutting process for forming the open end plane 205 will be described later in detail.

### [Machine for producing a container having spiral ridges on an inner surface thereof]

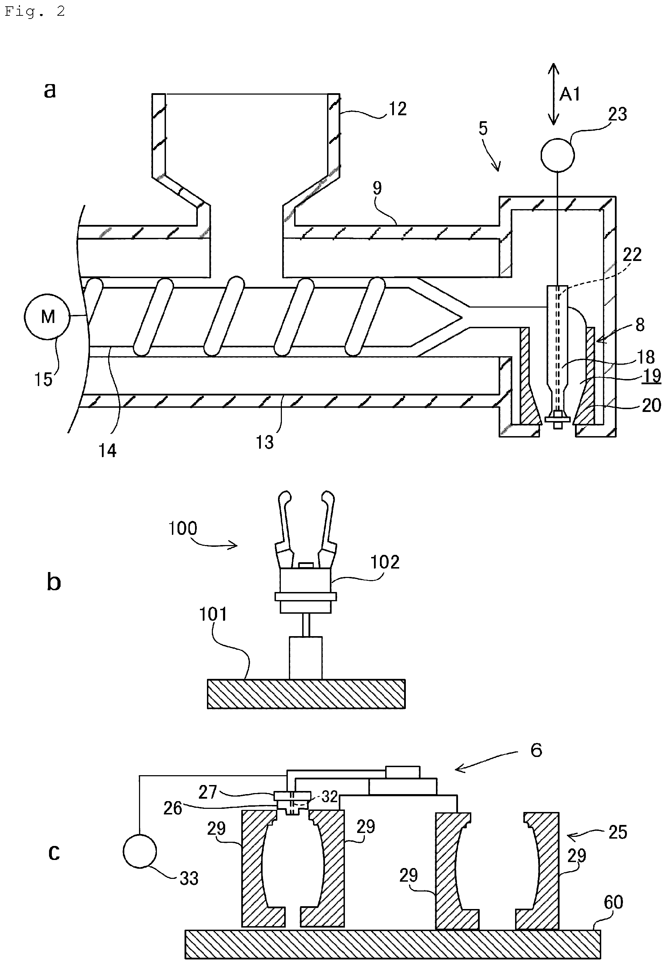

A machine for producing a container having spiral ridges on an inner surface thereof will be described below. The production machine is capable of producing a container having spiral ridges on an inner surface thereof in a simple manner by a direct blow molding. Figs. 2a to 2c show schematic views of the machine for producing a container having spiral ridges on an inner surface thereof (hereinafter called the direct blow molding machine) according to an embodiment of the present invention.

As shown in Figs. 2a to 2c, the direct blow molding machine comprises a parison forming device 5 for forming a tubular parison 4, a spiral ridge forming device 100 for twisting the parison 4, and a container forming device 6 for inflating the parison 4 into a container shape to give the container 2. The spiral ridge forming device 100 and the container forming device 6 are freely movable to the parison forming device 5 in the direct blow molding machine.

### [Outline of parison forming device]

In the parison forming device 5, a thermoplastic resin 3 is heated to melt, and the molten resin 3 is extruded into a tubular shape to give the parison 4. Examples of the thermoplastic resin 3 include PET (polyethylene terephthalate) resin and the like.

As shown in Fig. 2a, the parison forming device 5 comprises a parison-forming die 8 for extruding a molten thermoplastic resin into a tubular shape to give the parison 4, and a resin material feeder 9 for feeding the molten resin to the parison-forming die 8.

The resin material feeder 9 comprises a resin material hopper 12 in the shape of a funnel, a heating barrel 13 that is a cylinder disposed below the resin material hopper 12 to heat the resin material, an extrusion screw 14 for extruding the resin material held in the heating barrel 13, and an electric motor 15 for driving the extrusion screw 14.

The extrusion screw 14 is a cylinder having spiral screw flights on the outer peripheral surface, and is disposed inside the heating barrel 13 so that it shares the same axis with the heating barrel 13. The extrusion screw 14 rotates by being driven by the electric motor 15, and extrudes the resin held in the heating barrel 13 into the parison-forming die 8.

The parison-forming die 8 comprises a mandrel 18 that serves as an axis-defining body in the extrusion of the molten thermoplastic resin into a tubular shape, and a parison-forming die's main body 20 surrounding an annular passage 19 that surrounds the mandrel 18. The annular passage 19 is defined by the inner periphery of the main body 20 of the parison-forming die 8 and the outer periphery of the mandrel 18. The axial direction A1 of the mandrel 18 is vertical so that the annular passage 19 is open downward. The molten resin 3 passes through the annular passage 19 to be formed into a tubular shape, and the parison 4 is thus obtained at the outlet end of the annular passage 19.

The parison forming device 5 comprises a first gas passage 22 (described later) disposed in the mandrel 18, and a first gas source 23 that supplies a pressurized cooling gas to the first gas passage 22.

The first gas source 23 supplies a flow of a pressurized cooling gas to the first gas passage 22 in the mandrel 18. The first gas passage 22 communicates with the interior of the parison 4. The pressurized cooling gas is, for example, air at a normal temperature at a predetermined pressure.

Due to this configuration, the pressurized cooling gas is blown into the parison 4 via the first gas passage 22, and thereby the tubular shape of the parison 4 extruded from the parison-forming die 8 can be maintained.

### [Details of configuration for forming raised ridges on an inner surface of a container]

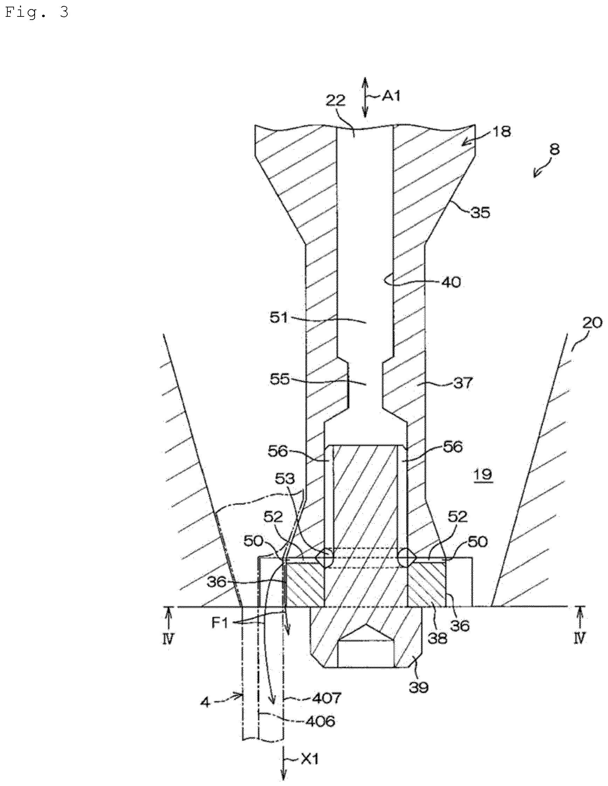

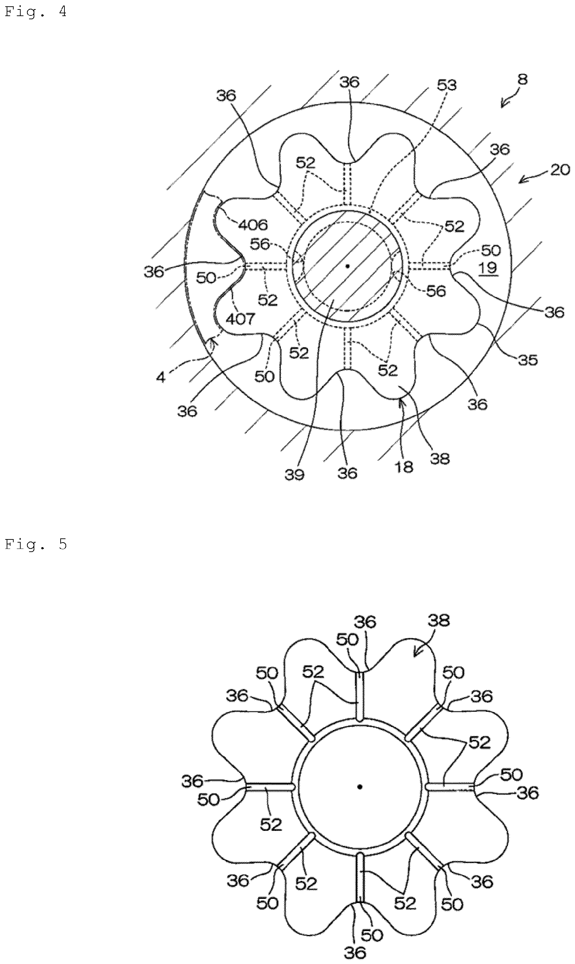

Fig. 3 shows a sectional view of the principal part of the parison forming device 5. Fig. 4 shows a sectional view taken along the line IV-IV shown in Fig. 3. As shown in Figs. 3 and 4, grooves 36 extending in the axial direction A1 of the mandrel 18 are disposed on the outer periphery 35 of the mandrel 18, and the grooves 36 are provided for forming raised ridges 407 on the inner periphery 406 of the parison 4. The first gas passage 22 of the mandrel 18 allows the pressurized cooling gas to flow into the parison 4 via the grooves 36 on the outer periphery 35 of the mandrel 18.

The mandrel 18 comprises a hollow cylindrical main body 37 as a mandrel main body, and a grooved member 38 that is fastened to one end of the main body 37. The grooved member 38 has grooves 36 thereon and forms the outlet end of the annular passage 19. The outer periphery 35 of the mandrel 18 include the outer periphery of the main body 37 and the outer periphery of the grooved member 38.

In an embodiment of the invention, the main body 37 and the grooved member 38 are provided as separate parts. The main body 37 and the grooved member 38 are fastened together with a bolt 39 as a fastening member. The means for fastening the main body 37 and the grooved member 38 is not limited to the bolt 39. For example, the main body 37 and the grooved member 38 may be integrated into a single unit made of a single material. The above embodiment in which the main body 37 and the grooved member 38 are fastened together with the bolt 39 is described herein.

The main body 37 is a columnar member extending in the axial direction A1 of the mandrel 18. The outer peripheral surface of the main body 37 forms part of the annular passage 19, and is continuous with the bottom of the grooves 36 of the grooved member 38, and is preferably smoothly continuous with the bottom of the grooves 36. The main body 37 has a hollow space 40 extending through the main body 37 in the axial direction A1 of the mandrel 18. The bottom part of the hollow space 40 has a female thread. The female thread is engaged with the male thread of the bolt 39.

The grooved member 38 has a first end face that is in tight contact with an end face of the main body 37, a second end face that is in the same axial direction of the mandrel 18 but is just opposite to the first end face, and a gear-shaped outer periphery. The grooved member 38 also has an insertion hole into which the bolt 39 is inserted. The grooved member 38 is sandwiched and fastened between the head of the bolt 39 and the end face of the main body 37. The outer periphery of the grooved member 38 has a plurality of grooves 36, for example, eight grooves 36. At least one groove 36 is disposed on the outer periphery of the grooved member 38.

The plurality of grooves 36 are separated from each other at equal intervals in the circumferential direction of the mandrel 18. The plurality of grooves 36 have the same shape. The upstream and downstream ends of each of the grooves 36 are open so as to allow the resin 3 in the annular passage 19 to flow from one end to the other. The grooves 36 partially define the outlet of the annular passage 19.

The annular passage 19 is defined by the inner periphery of the main body 20 of the parison-forming die 8 and the outer periphery 35 of the mandrel 18. The width of the annular passage 19 (in the radial direction of the mandrel 18) is larger in the region where the groove 36 is present, and is smaller in the region between two grooves 36 adjacent to each other.

The first gas passage 22 has a plurality of gas outlets 50 that discharge the pressurized cooling gas. Each of the gas outlets 50 is disposed at the bottom of each of the grooves 36 so as to face each of the raised ridges 407 of the parison 4. The raised ridges 407 can thus be cooled by the pressurized cooling gas. In particular, each of the gas outlets 50 is disposed at the edge of the bottom of each of the grooves 36 on the outer periphery 35 of the mandrel 18. Specifically, each of the gas outlets 50 is disposed at the most upstream edge of the flow of the resin 3 extruded from the annular passage 19 into the extrusion direction X1, and faces the most upstream part of each of the raised ridges 407 of the parison 4.

The first gas passage 22 has a first gas passage segment 51 that is disposed in the mandrel 18 and extends in the axial direction A1 of the mandrel 18, and also has a plurality of second gas passage segments 52 that are disposed in the mandrel 18 and extend in the radial direction of the mandrel 18. Each of the second gas passage segments 52 is provided with the gas outlet 50 so that the gas outlet 50 is located at the radially outward end of the mandrel 18 (that is, the downstream end of the gas flow).

The first gas passage 22 has a third gas passage segment 53 that is disposed in the mandrel 18 to connect the plurality of second gas passage segments 52 to the first gas passage segment 51. Alternatively, the second gas passage segments 52 may be directly connected to the first gas passage segment 51.

The first gas passage segment 51 has a first section 55 defined by the inner periphery of the hollow space 40 of the main body 37 of the mandrel 18, and second sections 56 defined by the inner peripheral surface at the edge of the hollow space 40 of the mandrel 18 and the outer periphery of the shank of the bolt 39. The outer periphery of the shank of the bolt 39 has a plurality of grooves that extend in the axial direction of the bolt 39. The second sections 56 of the first gas passage segment 51 are defined by these plurality of grooves and the inner peripheral surface at the edge of the hollow space 40 of the mandrel 18.

The third gas passage segment 53 is an annular gas passage that extends in an endless loop in the circumferential direction of the mandrel 18. The third gas passage segment 53 communicates with the lower end of the second sections 56 of the first gas passage segment 51, and also communicates with the radially inward ends of the plurality of second gas passage segments 52 formed on the mandrel 18. The third gas passage segment 53 is defined by, for example, at least one of the following (in this embodiment, all of the following): the grooves disposed on the outer periphery of the shank of the bolt 39, the chamfered edge of the main body 37, and the chamfered edge of the grooved member 38.

Fig. 5 shows a plan view of the grooved member 38 shown in Fig. 3, which is not mounted on the device. As shown in Figs. 3 and 5, the plurality of second gas passage segments 52 are defined by a plurality of radially extending grooves disposed on the first end face of the grooved member 38, and the end face of the main body 37.

By means of the parison forming device 5 of this embodiment, a molten thermoplastic resin is extruded through the annular passage 19 of the parison-forming die 8 that has the mandrel 18 with the grooves 36 to form the tubular parison 4 having raised ridges 407 on its inner periphery. At the time of the formation of the parison 4, a gas flow from the gas passages of the mandrel 18 can be blown into the parison 4 via the grooves 36.

The gas flow can be blown mainly along the raised ridges 407 on the inner periphery of the parison 4 via the grooves 36, thereby intensively cooling the raised ridges 407 of the parison 4 and maintaining the shape of the raised ridges 407 of the parison 4 without the collapse of the shape. For example, the collapse of the shape of the raised ridges 407 can be prevented at the time of inflation of the parison 4 formed as above into a container shape, and consequently the raised ridges 407 on the inner periphery of the resultant container 2 have a high accuracy of shape.

In addition, the gas flow forms a thin gas layer between the surface of each of the grooves 36 and the surface of each of the raised ridges 407 passing through the grooves 36. Due to this thin gas layer, the thermoplastic resin easily flows through each of the grooves 36.

### [Spiral ridge forming device]

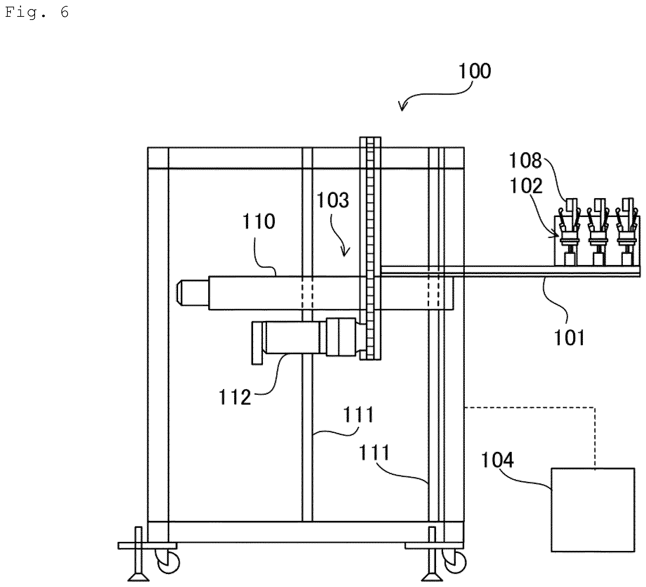

The spiral ridge forming device 100 is provided for plastically deforming the raised ridges 407 on the inner surface of the parison 4 into spiral ridges. As shown in Fig. 6, the spiral ridge forming device 100 comprises a base 101, a spiral ridge forming unit 102 disposed on the base 101, a transfer mechanism 103 that moves the base 101 together with the spiral ridge forming unit 102 in the horizontal and vertical directions, a sensor 108, and a controller 104 that controls the movement of the spiral ridge forming unit 102 and the transfer mechanism 103.

The transfer mechanism 103 moves the base 101 together with the spiral ridge forming unit 102 to the position under the parison-forming die 8, and also removes the spiral ridge forming unit 102 from the position under the parison-forming die 8.

The transfer mechanism 103, as shown in Fig. 6, comprises a support table 110, four support columns 111, and a transfer motor 112. The support table 110 is supported by the four support columns 111 extending in the vertical direction so that the support table 110 is freely movable in the vertical direction. When the transfer motor 112 is driven, the support table 110 vertically moves along the four support columns 111. The base 101 is supported on the top of the support table 110 so that the base 101 is freely movable in the direction perpendicular to the longitudinal direction of the support columns 111. The base 101 horizontally moves on the top of support table 110 when the motor (not shown) is driven.

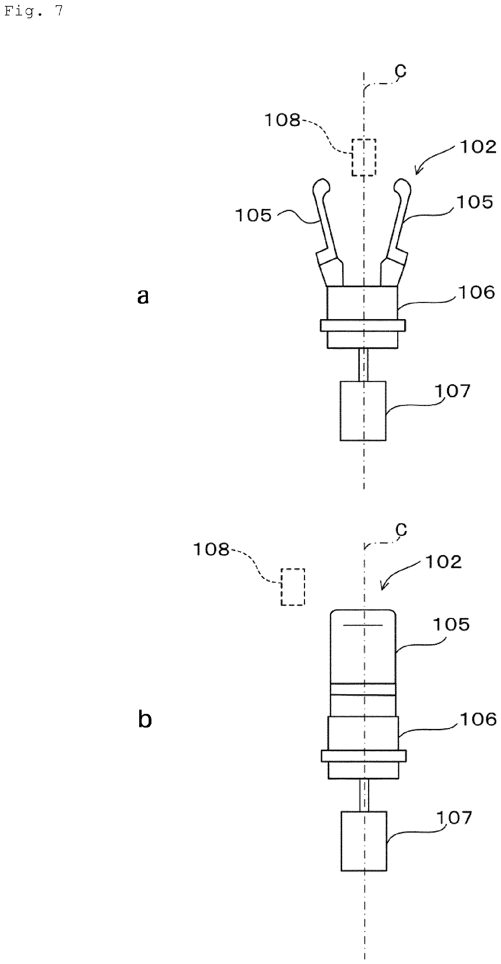

The spiral ridge forming unit 102 is disposed near one end of the base 101. In an embodiment of the invention, for example, three spiral ridge forming units 102 are disposed, but the number of the spiral ridge forming units is not limited thereto. As shown in Fig. 7a and 7b, the spiral ridge forming unit 102 comprises a pair of arms 105 serving as a clamp, an opening and closing mechanism 106, and a rotary motor 107 serving as a rotator.

The pair of arms 105 grips the parison 4. The arms are made of aluminum, and the outer surface of the pair of arms 105 is coated with Teflon (registered trademark).

Each of arms 105, as shown in Fig. 7a, is connected to the opening and closing mechanism 106 at the bottom. When the opening and closing mechanism 106 is driven, the tips of the pair of arms 105 move apart from each other or come close to each other in order to open or close the pair of arms 105. The tip of each arm 105 has an inwardly curved shape. As shown in Fig. 7b, each arm 105 has a long width. Due to this long width, the pair of arms 105 easily grips the parison 4.

The rotary motor 107 is disposed on the top surface of the base 101 of the spiral ridge forming device 100, and the driving shaft of the rotary motor 107 vertically extends. The driving shaft of the rotary motor 107 is connected to the opening and closing mechanism 106 that is connected to the pair of arms 105.

The pair of arms 105 is arranged in symmetry with respect to the imaginary line indicated by C in Fig. 7a, which extends through the axial center of the driving shaft of the rotary motor 107. That is, this imaginary line is the symmetrical line of the pair of arms 105.

The sensor 108 is disposed obliquely above the pair of arms 105 (see the sensor 108 indicated by the broken line in Figs. 7a and 7b).

The controller 104 of the spiral ridge forming device 100 drives the transfer mechanism 103 to move the spiral ridge forming unit 102 to the position under the parison-forming die 8. This movement of the spiral ridge forming unit 102 is performed so that the axis of symmetry between the pair of arms 105 (the midline between the pair of arms) overlaps the axis of the parison 4. When the sensor 108 detects that the parison 4 hanging from the parison-forming die 8 reaches a predetermined position, the controller 104 drives the opening and closing mechanism 106 of the spiral ridge forming unit 102 to close the pair of arms 105, and the pair of arms 105 grips the outer peripheral surface of the parison 4 at the bottom. At the time of gripping, the bottom of the outer peripheral surface of the parison 4 is pinched by the force of the pair of arms 105. By pinching the bottom of the outer peripheral surface of the parison 4 in this manner, the pair of arms 105 can firmly grip the parison 4.

The controller 104 drives the rotary motor 107 to rotate a predetermined angle at a predetermined rotational speed while allowing the pair of arms 105 to continue gripping the bottom of the parison 4. The pair of arms 105 rotates around the axis of rotation of the rotary motor 107 by being driven by means of the rotary motor 107, and the parison 4 is twisted in the circumferential direction so that the raised ridges 407 on the inner surface of the parison 4 are converted into spiral ridges. The controller 104 then drives the transfer mechanism 103 to remove the spiral ridge forming unit 102 from the position under the parison-forming die 8.

### [Container forming device]

The container forming device 6 comprises a base 60, two container molds 25 mounted on the base 60, a pin insertion device 27 that has a blow pin 26 appropriate to the diameter of the mouth of the container 2 to be formed, and a transfer mechanism (not shown) that moves the base 60 together with the container molds 25 and the pin insertion device 27 (see Fig. 2). The container mold 25 is used to hold the parison 4 twisted by the spiral ridge forming device 100 while the parison 4 is inflated into a container shape. The two container molds 25 are configured to switch places with each other.

After the spiral ridge forming unit 102 is removed from the position under the parison-forming die 8, the transfer mechanism of the container forming device 6 moves the container mold 25 to the position under the parison-forming die 8.

After the parison 4 is twisted by the spiral ridge forming device 100 so that the raised ridges 407 are converted into the spiral ridges, part of the parison 4 is held in the container mold 25, inflated into a container shape, and cooled to give the container 2.

The container mold 25 has a cavity for forming the container 2, and the shape of the inner surface of the cavity corresponds to the shape of the outer surface of the container 2 to be produced. The container mold 25 is composed of a pair of mold halves 29 that are relatively movable in the horizontal direction.

After the container mold 25 is moved to the position under the parison-forming die 8, the parison 4 is positioned between the pair of mold halves 29 at a distance, and the pair of mold halves 29 comes closer to each other so as to be in contact with each other. The parison 4 held in the container mold 25 in this manner is inflated into a container shape.

The container forming device 6 further comprises a second gas passage 32 provided in the blow pin 26, and a second gas source 33 that supplies a pressurized cooling gas to the second gas passage 32.

The second gas source 33 supplies air at normal temperature at a predetermined pressure, as a pressurized cooling gas, to the second gas passage 32 in the blow pin 26. The second gas passage 32 is capable of communicating with the interior of the parison 4 held in the container mold 25, thereby allowing the pressurized cooling gas to be blown into the parison 4 via the second gas passage 32 at a required timing.

After the completion of the formation of the container 2 in the container mold 25, the transfer mechanism of the container forming device 6 removes the container mold 25 from the position under the parison-forming die 8, and then the transfer mechanism 103 of the spiral ridge forming device 100 moves the spiral ridge forming unit 102 to the position under the parison-forming die 8. Thus, the spiral ridge forming unit 102 and the container mold 25 are configured to switch places with each other by means of the transfer mechanism 103 of the spiral ridge forming device 100 and the transfer mechanism of the container forming device 6.

### [Process for producing a container having spiral ridges on an inner surface thereof]

The process for producing a container having spiral ridges on an inner surface thereof (hereinafter called the direct blow molding) comprises
(1) a parison forming step of extruding a molten thermoplastic resin 3 into a tubular shape to form a parison 4,
(2) a spiral ridge forming step of twisting the parison 4 so that raised ridges 407 on the parison 4 are converted into spiral ridges, and
(3) a container forming step of blowing a pressurized cooling gas into the parison 4 that has been twisted in the spiral ridge forming step and is held in a container mold 25 so as to be closed at one end, thereby inflating the parison 4 into a container shape while cooling the parison 4 to give a container 2.

### [Parison forming step]

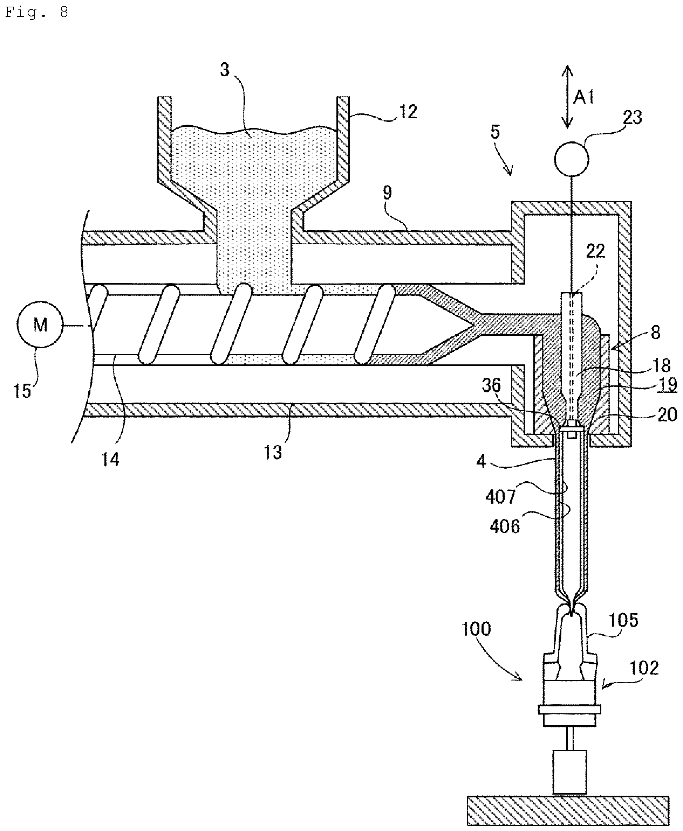

In the parison forming step, as shown in Fig. 8, a solid resin 3 is fed into the heating barrel 13 from the resin material hopper 12. The resin 3 fed into the heating barrel 13 is subjected to heat of the heating barrel 13 and gradually melts. The molten resin 3 is carried from the heating barrel 13 to the parison-forming die 8 by the extrusion force of the extrusion screw 14 driven by the electric motor 15.

The molten resin 3 that reaches the parison-forming die 8 passes through the annular passage 19 and is extruded downward from the parison-forming die 8 to give the tubular parison 4.

At the time of the formation of the parison 4, a pressurized cooling gas is blown from the first gas passage 22 via grooves 36. The pressurized cooling gas is weakly pressurized (for example, at 0.5 to 1.0 kg/cm²), and has a lower pressure than the pressurized cooling gas of the second gas passage 32 of the container forming device 6. The pressure of the pressurized cooling gas of the first gas passage 22 is set so that no substantial change in the shape of the parison 4 occur when the pressurized cooling gas from the first gas passage 22 is blown over the parison 4 still in a soft state.

At the same time as the formation of the parison 4, the raised ridges 407 are formed on the inner periphery 406 of the parison 4 by the grooves 36 on the outer periphery 35 of the mandrel 18 of the parison-forming die 8. The thickness of the wall where the raised ridges 407 are formed is relatively large in the parison 4.

The pressurized cooling gas discharged from the gas outlets 50 of the first gas passage 22 indicated by F1 in Fig. 3 flows in the radially outward direction of the mandrel 18 along the raised ridges 407 on the inner periphery 406 of the parison 4, and also flows downward in the axial direction A1 of the mandrel 18. The pressurized cooling gas then gradually flows from the tops of the raised ridges 407 toward the periphery thereof, along the raised ridges 407. Finally, the pressurized cooling gas is blown into the parison 4.

### [Details of step of forming raised ridges on an inner surface of a container]

At the time of formation of the parison 4, the pressurized cooling gas is discharged from the gas outlets 50 of the mandrel 18 (see Fig. 4), and flows along the raised ridges 407 on the inner periphery 406 of the parison 4. This process serves as a cooling step for cooling the raised ridges 407 on the inner surface of the parison 4. By this process, the raised ridges 407 of the parison 4 are intensively cooled, and thus the shape of the raised ridges 407 of the parison 4 can be maintained without the collapse of the shape. Therefore, for example, the collapse of the shape of the raised ridges 407 can be prevented at the time of inflation of the parison 4 formed as above into a container shape, and consequently the spiral ridges 207 on the inner peripheral surface 206 of the body 203 of the resultant container 2 have high accuracy of shape.

In addition, the pressurized cooling gas supplied from the first gas passage 22 forms a thin gas layer between the surface of each of the grooves 36 and the surface of each of the raised ridges 407 passing through the grooves 36. Due to this thin gas layer, the thermoplastic resin 3 easily flows through each of the grooves 36. In this way, the spiral ridges 207 on the resultant container 2 have further higher accuracy of shape.

The gas outlets 50 of the first gas passage 22 are disposed at the most upstream edge of the grooves 36 (see Fig. 3). This configuration allows the pressurized cooling gas to start cooling the raised ridges 407 of the parison 4 immediately after the formation of the raised ridges 407.

Since the gas outlets 50 of the first gas passage 22 are formed at the grooved member 38, which has the grooves 36, the gas outlets 50 and the grooves 36 are relatively positioned with good accuracy, thereby ensuring that the pressurized cooling gas discharged from the first gas passage 22 flows along the grooves 36. In this way, the spiral ridges 207 on the container 2 have further higher accuracy of shape.

### [Spiral ridge forming step]

In the parison forming step, the resin 3 is extruded from the parison-forming die 8, and as the extrusion is continued, the length of the parison 4 hanging from the parison-forming die 8 becomes longer. In the next step of forming spiral ridges, as shown in Fig. 8, the sensor 108 detects that the parison 4 hanging from the parison-forming die 8 reaches a predetermined position, and the pair of arms 105 clamps the parison 4 by gripping the outer peripheral surface at the bottom (clamping step). At the time of clamping, the bottom of the parison 4 is pinched by the clamping force of the pair of arms 105. While the parison 4 is kept clamped, the parison 4 and the raised ridges 407 thereon are twisted in the circumferential direction (twisting step). As a result, the raised ridges 407 are converted into spiral ridges. Here, the twisting step is preferably performed by twisting the parison 4 around the axis of the parison 4.

Taking into account the resilience of the parison 4, the parison 4 is preferably sufficiently largely twisted. For example, in order to form spiral ridges with a three-quarter twist, the parison 4 is twisted one revolution, taking into account that the parison 4 will return to its original shape by a one-quarter revolution due to its resilience. In this way, the desired spiral ridges can be formed.

### [Container forming step]

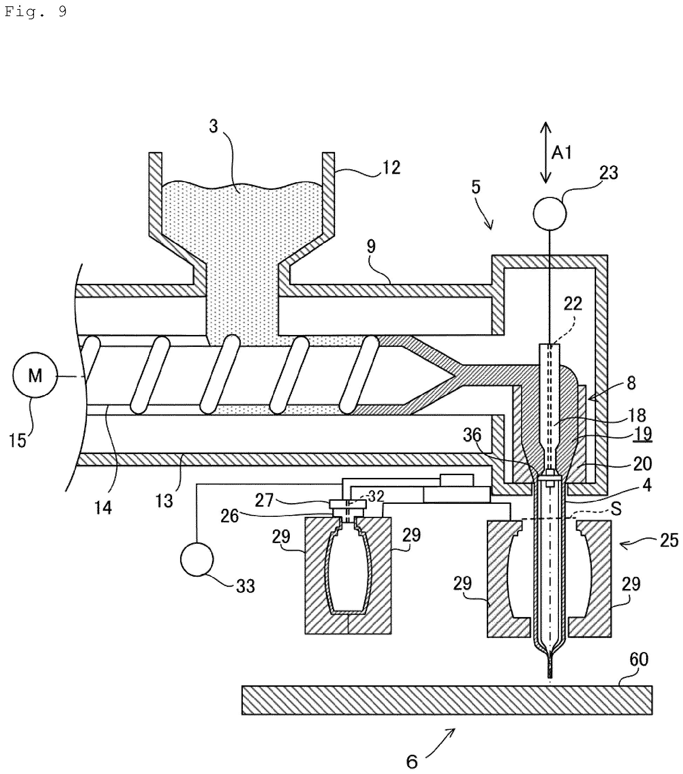

In the next step of forming a container, as shown in Fig. 9, the pair of mold halves 29 in the open configuration is positioned to surround the parison 4 having spiral ridges converted from the raised ridges 407 (see the pair of mold halves 29 on the righthand side of Fig. 9). At this point of time, the parison 4 is hanging from the die. The pair of mold halves 29 is then closed to capture the parison 4, thereby closing the bottom of the parison 4 (see the pair of mold halves 29 on the left-hand side of Fig. 9). When the pair of mold halves 29 is closed, the bottom of the parison 4 pinched by the pair of arms 105 is cut off. Next, after closing the bottom of the parison 4, the top of the parison 4 is cut off by the cutting plane S (see Fig. 9) by means of a hot cutter (not shown).

At the time of cutting off, since the parison 4 is in a semisolid state, the parison 4's wall with the spiral ridges 207 may sag downward from the cutting plane immediately after cutting off with the hot cutter, resulting in the parison 4 with an irregular cutting plane. Such sagging may occur because the spiral ridges 207 project radially inwardly from the inner peripheral surface of the parison 4. The spiral ridges 207 with a greater projection height from the inner peripheral surface of the parison 4 will more easily sag downward due to their own weights. However, in an embodiment of the production process, the spiral ridges 207 on the inner surface of the parison 4 are hardened by cooling in the cooling step. Due to this, immediately after cutting off with the hot cutter, the spiral ridges 207 do not sag downward from the cutting plane, and the cutting plane of the parison 4 remains flat. The cutting plane of the parison 4 corresponds to the open end plane 205 of the mouth 202 of the resultant container 2. Therefore, there is no need for flattening the open end plane 205 of the mouth 202 by means of cutting and the like, and thus there is no need for concern that burr removed by cutting and the like falls into the container 2.

The pressurized cooling gas is continuously discharged from the first gas passage 22 from the start of the formation of the parison 4 until the end of cutting off the parison 4 at the predetermined position. Alternatively, the pressurized cooling gas may be discharged at a required timing.

Next, the blow pin 26 of the pin insertion device 27 is inserted into the opening at the top of the parison 4 that has been previously cut off (see the pair of mold halves 29 on the left-hand side of Fig. 9). The pressurized air at about 0.39 to 0.49 MPa from the gas outlet of the second gas passage 32 of the blow pin 26 is then blown into the parison 4 of which the bottom has been closed. By this blowing, the parison 4 at high temperature in a semisolid state is inflated. During inflation, the wall thickness of the parison 4 becomes thinner, and the parison 4 gradually takes a shape conforming to the shape of the inner surface of the cavity of the container mold 25. As a result, the container 2 in a semisolid state is formed.

During the inflation of the parison 4, the raised ridges on the parison 4 in a semisolid state is prevented from being stretched in the circumferential direction, whereas the semisolid parison 4's wall between the raised ridges adjacent to each other is allowed to be stretched in the circumferential direction. Consequently, the spiral ridges 207 in the desired shape are formed on the inner peripheral surface 206 of the body 203 of the container 2.

The container mold 25 is then cooled so that the container 2 solidifies. The pair of mold halves 29 is made to separate from each other, and the container 2 is removed from the pair of mold halves 29.

The pressurized cooling gas passed through the first gas passage 22 and the second gas passage 32 is not limited to air, and may be a gas that does not undergo reactions with the resin 3 to be formed into the parison 4, for example, an inert gas.

### [Other embodiments]

Various modifications of the above embodiment are possible as described below. The following description focuses on modifications of the above embodiment. The configurations other than those described below are the same as those in the above embodiment.

In the parison forming step, for example, the pressurized cooling gas may be blown into the parison 4 from the first gas passage 22 via the grooves 36 to inflate the parison 4 held in the container mold 25, and then the parison 4 may be cut off at a predetermined position.

The gas outlets 50 may be disposed on the grooves 36 so that the vertical position of the gas outlets 50 along the axial direction A1 of the mandrel 18 is in the middle between the vertically upper end and the vertically lower end of the grooves 36, although not shown in the Figs.

The second gas passage segments 52 of the first gas passage 22 may be defined by the first end face of the grooved member 38 and grooves, having gas outlets 50, which are formed on the end face of the main body 37 of the mandrel 18 so as to extend in the radially outward direction of the mandrel 18, although not shown in the Figs. Alternatively, the second gas passage segments 52 of the first gas passage 22 may be defined by grooves formed on the end face of the main body 37 of the mandrel 18 so as to extend in the radially outward direction of the mandrel 18 and their counterpart grooves which face the grooves on the mandrel's main body and which are formed on the first end face of the grooved member 38 so as to extend in the radially outward direction of the mandrel 18.

In the spiral ridge forming device 100 according to the above embodiment, the pair of arms 105 clamps the parison 4 by gripping the bottom of the parison 4, but the embodiments of the pair of arms 105 are not limited thereto. For example, the pair of arms 105 may clamp the parison 4 by gripping the lateral surface of the parison 4. In this embodiment, the pair of arms 105 is positioned outside the radial direction of the parison 4, and is rotated in the circumferential direction of the parison 4 to twist the parison 4. Also in this case, the desired spiral ridges can be formed in the same way as the above embodiment.

In the spiral ridge forming device 100 according to the above embodiment, the clamping member is the pair of arms 105, but the embodiments of the clamp member are not limited thereto. For example, three or more arms may be provided around the circumference of the hollow cylindrical opening and closing mechanism. Alternatively, the clamping member may be in the form of a hollow cylinder, and the hollow cylindrical clamping member may be fitted into the opening at the bottom of the parison 4, thereby clamping the parison 4.

In the spiral ridge forming device 100 according to the above embodiment, the sensor 108 is disposed obliquely relative to the pair of arms 105, but the position of the sensor 108 is not limited to this embodiment. For example, the sensor 108 may be disposed under the pair of arms 105 so that the sensor 108 is disposed on the symmetrical line of the pair of arms with the sensor head upward. In this case, the sensor may be fixed on the top of the opening and closing mechanism.

Various other modifications of the design are possible within the scope of the claims attached hereto.

### INDUSTRIAL APPLICABILITY

As described above, the present invention provides a useful process for producing a container having spiral ridges on an inner surface thereof, and a useful machine for producing the container.

### REFERENCE SIGNS LIST

- 1: Direct blow molding machine
- 2: Container
- 3: Resin
- 4: Parison
- 8: Parison-forming die
- 18: Mandrel
- 19: Annular passage
- 20: Main body of parison-forming die
- 22: First gas passage
- 35: Outer periphery of mandrel
- 36: Grooves
- 100: Spiral ridge forming device
- 102: Spiral ridge forming unit
- 105: Pair of arms (clamp)
- 107: Rotary motor (rotator)
- 206: Inner periphery of container
- 207: Spiral ridges
- 406: Inner periphery of parison
- 407: Raised ridges

## Claims

1. A process for producing a container (2) having spiral ridges (207) on an inner surface thereof, by a machine for producing a container (2) having spiral ridges (207) on an inner surface thereof,
wherein the machine comprises
a parison forming device (5) for forming a tubular parison (4) having raised ridges (407) on an inner surface thereof,
a spiral ridge forming device (100) comprising a clamp (105) for clamping the parison (4) hanging from a die (8) of the parison forming device (5) after extrusion of the parison (4) from the die (8), and a rotator (107) for rotating the clamp (105) clamping the parison (4) in the circumferential direction of the parison (4) to twist the parison (4) and the raised ridges (407) thereon in the circumferential direction, and
a container (2) forming device (6) for inflating the parison (4) having the spiral ridges (407) from the inside thereof to form a container (2), wherein
the spiral ridge forming device (100) comprises a base (101), a spiral ridge forming unit (102) disposed on the base (101), a transfer mechanism (103) that moves the base (101) together with the spiral ridge forming unit (102) in the horizontal and vertical directions, a sensor (108), and a controller (104) that controls the movement of the spiral ridge forming unit (102) and the transfer mechanism (103),
the process comprising
a parison forming step of forming a tubular parison(4) having raised ridges (407) on the inner surface thereof,
a spiral ridge forming step of converting the raised ridges (407) on the parison(4) obtained in the parison forming step into spiral ridges, and
a container forming step of inflating the parison(4) obtained in the spiral ridge forming step from the inside thereof to form a container (2),
the spiral ridge forming step comprising
a clamping step of clamping the parison(4) hanging from a die (8) after extrusion of the parison(4) from the die (8) in the parison forming step, and
a twisting step of twisting the parison(4) and the raised ridges (407) thereon in the circumferential direction of the parison(4) while the parison (4) clamped in the clamping step being kept clamped.

2. The process for producing the container (2) having spiral ridges (207) on the inner surface thereof according to claim 1, further comprising
a cooling step of cooling the raised ridges (407) on the inner surface of the parison (4), and the cooling step being performed simultaneously with the parison forming step and the spiral ridge forming step.

3. A machine for producing the container (2) having spiral ridges (207) on the inner surface thereof, the machine comprising
a parison forming device (5) for forming a tubular parison(4) having raised ridges (407) on an inner surface thereof,
a spiral ridge forming device (100) comprising a clamp (105) for clamping the parison (4) hanging from a die (8) of the parison forming device (5) after extrusion of the parison (4) from the die (8), and a rotator (107) for rotating the clamp (105) clamping the parison (4) in the circumferential direction of the parison (4) to twist the parison (4) and the raised ridges (407) thereon in the circumferential direction, and
a container forming device for inflating the parison(4) having the spiral ridges (407) from the inside thereof to form a container (2), wherein
the spiral ridge forming device (100) comprises a base (101), a spiral ridge forming unit (102) disposed on the base (101), a transfer mechanism (103) that moves the base (101) together with the spiral ridge forming unit (102) in the horizontal and vertical directions, a sensor (108), and a controller (104) that controls the movement of the spiral ridge forming unit (102) and the transfer mechanism (103).

## Patentansprüche

1. Verfahren zum Herstellen eines Behälters (2) mit spiralförmigen Erhöhungen (207) an einer Innenfläche davon, durch eine Maschine zum Herstellen eines Behälters (2) mit spiralförmigen Erhöhungen (207) an einer Innenfläche davon,
wobei die Maschine Folgendes umfasst:
eine Bildungsvorrichtung (5) für einen Vorformling zum Bilden eines rohrförmigen Vorformlings (4) mit erhöhten Erhöhungen (407) an einer Innenfläche davon,
eine Bildungsvorrichtung (100) für eine spiralförmige Erhöhung, umfassend eine Klammer (105) zum Klemmen des Vorformlings (4), der von einer Gussform (8) der Bildungsvorrichtung (5) für einen Vorformling hängt, nach der Extrusion des Vorformlings (4) aus einer Gussform (8), und einen Rotator (107) zum Drehen der Klammer (105), die den Vorformling (4) hält, in der Umfangsrichtung des Vorformlings (4), um den Vorformling (4) und die erhöhten Erhöhungen (407) daran in der Umfangsrichtung zu verdrehen, und
eine Bildungsvorrichtung (6) für einen Behälter (2) zum Aufblasen des Vorformlings (4) mit den spiralförmigen Erhöhungen (407) aus dem Inneren davon, um einen Behälter (2) zu bilden, wobei
die Bildungsvorrichtung (100) für eine spiralförmige Erhöhung eine Basis (101), eine Bildungseinheit (102) für eine spiralförmige Erhöhung, die an der Basis (101) angeordnet ist, einen Übertragungsmechanismus (103), der die Basis (101) zusammen mit der Bildungseinheit (102) für eine spiralförmige Erhöhung in der horizontalen und der vertikalen Richtung bewegt, einen Sensor (108) und eine Steuerung (104), die die Bewegung der Bildungseinheit (102) für eine spiralförmige Erhöhung und des Übertragungsmechanismus (103) steuert, umfasst,
der Prozess umfassend:
einen Bildungsschritt für einen Vorformling zum Bilden eines rohrförmigen Vorformlings (4) mit erhöhten Erhöhungen (407) an der Innenfläche davon,
einen Bildungsschritt für eine spiralförmige Erhöhung zum Umwandeln der erhöhten Erhöhungen (407) an dem Vorformling (4), die in dem Bildungsschritt für einen Vorformling erhalten werden, in spiralförmige Erhöhungen, und
einen Bildungsschritt für einen Behälter zum Aufblasen des Vorformlings (4), der in dem Bildungsschritt für eine spiralförmige Erhöhung erhalten wurde, aus dem Inneren davon, um einen Behälter (2) zu bilden,
der Bildungsschritt für eine spiralförmige Erhöhung umfassend:
einen Klemmschritt zum Klemmen des Vorformlings (4), der von einer Gussform (8) hängt, nach der Extrusion des Vorformlings (4) aus der Gussform (8) in dem Bildungsschritt für einen Vorformling, und
einen Verdrehschritt zum Verdrehen des Vorformlings (4) und der erhöhten Erhöhungen (407) daran in der Umfangsrichtung des Vorformlings (4), während der Vorformling (4), der in dem Klemmschritt geklemmt wird, geklemmt bleibt.

2. Verfahren zum Herstellen des Behälters (2) mit spiralförmigen Erhöhungen (207) an der Innenfläche davon nach Anspruch 1, ferner umfassend
einen Kühlungsschritt zum Kühlen der erhöhten Erhöhungen (407) an der Innenfläche des Vorformlings (4), wobei der Kühlungsschritt gleichzeitig mit dem Bildungsschritt für einen Vorformling und dem Bildungsschritt für eine spiralförmige Erhöhung durchgeführt wird.

3. Maschine zum Herstellen des Behälters (2) mit spiralförmigen Erhöhungen (207) an der Innenfläche davon, die Maschine umfassend
eine Bildungsvorrichtung (5) für einen Vorformling zum Bilden eines rohrförmigen Vorformlings (4) mit erhöhten Erhöhungen (407) an einer Innenfläche davon,
eine Bildungsvorrichtung (100) für eine spiralförmige Erhöhung, umfassend eine Klammer (105) zum Klemmen des Vorformlings (4), der von einer Gussform (8) der Bildungsvorrichtung (5) für einen Vorformling hängt, nach der Extrusion des Vorformlings (4) aus einer Gussform (8), und einen Rotator (107) zum Drehen der Klammer (105), die den Vorformling (4) hält, in der Umfangsrichtung des Vorformlings (4), um den Vorformling (4) und die erhöhten Erhöhungen (407) daran in der Umfangsrichtung zu verdrehen, und
eine Bildungsvorrichtung für einen Behälter zum Aufblasen des Vorformlings (4) mit den spiralförmigen Erhöhungen (407) aus dem Inneren davon, um einen Behälter (2) zu bilden, wobei
die Bildungsvorrichtung (100) für eine spiralförmige Erhöhung eine Basis (101), eine Bildungseinheit (102) für eine spiralförmige Erhöhung, die an der Basis (101) angeordnet ist, einen Übertragungsmechanismus (103), der die Basis (101) zusammen mit der Bildungseinheit (102) für eine spiralförmige Erhöhung in der horizontalen und der vertikalen Richtung bewegt, einen Sensor (108) und eine Steuerung (104), die die Bewegung der Bildungseinheit (102) für eine spiralförmige Erhöhung und des Übertragungsmechanismus (103) steuert, umfasst.

## Revendications

1. Procédé pour la production d'un récipient (2) possédant des nervures en spirale (207) sur une surface interne de celui-ci, par une machine destinée à produire un récipient (2) possédant des nervures en spirale (207) sur une surface interne de celui-ci,
ladite machine comprenant
un dispositif de formage de paraison (5) pour former une paraison tubulaire (4) possédant des nervures surélevées (407) sur une surface interne de celle-ci,
un dispositif de formage de nervure en spirale (100) comprenant une pince (105) pour serrer la paraison (4) suspendue à une filière (8) du dispositif de formage de paraison (5) après l'extrusion de la paraison (4) à partir de la filière (8), et un rotateur (107) pour faire tourner la pince (105) serrant la paraison (4) selon la direction circonférentielle de la paraison (4) afin de tordre la paraison (4) et les nervures surélevées (407) sur celle-ci selon la direction circonférentielle, et
un dispositif de formage (6) de récipient (2) pour gonfler la paraison (4) possédant les nervures en spirale (407) à partir de l'intérieur de celle-ci afin de former un récipient (2),
ledit dispositif de formage de nervure en spirale (100) comprenant une base (101), une unité de formage de nervure en spirale (102) disposée sur la base (101), un mécanisme de transfert (103) qui déplace la base (101) ensemble avec l'unité de formage de nervure en spirale (102) selon les directions horizontale et verticale, un capteur (108) et un dispositif de commande (104) qui commande le déplacement de l'unité de formage de nervures en spirale (102) et du mécanisme de transfert (103), le processus comprenant
une étape de formage de paraison comprenant le formage d'une paraison tubulaire (4) possédant des nervures surélevées (407) sur sa surface interne,
une étape de formage de nervure en spirale comprenant la conversion des nervures surélevées (407) sur la paraison (4) obtenue dans l'étape de formage de paraison en des nervures en spirale, et
une étape de formage de récipient comprenant le gonflement de la paraison (4) obtenue dans l'étape de formage de nervure en spirale à partir de l'intérieur de celle-ci pour former un récipient (2),
l'étape de formage de nervure en spirale comprenant
une étape de serrage comprenant le serrage de la paraison (4) suspendue à une filière (8) après l'extrusion de la paraison (4) de la filière (8) dans l'étape de formage de paraison, et
une étape de torsion comprenant la torsion de la paraison (4) et des nervures surélevées (407) sur celle-ci selon la direction circonférentielle de la paraison (4) pendant que la paraison (4) serrée dans l'étape de serrage est maintenue serrée.

2. Procédé pour la production du récipient (2) possédant des nervures en spirale (207) sur sa surface interne selon la revendication 1, comprenant en outre
une étape de refroidissement comprenant le refroidissement des nervures surélevées (407) sur la surface interne de la paraison (4), et l'étape de refroidissement étant effectuée simultanément avec l'étape de formage de paraison et l'étape de formage de nervures en spirale.

3. Machine pour la production du récipient (2) possédant des nervures en spirale (207) sur sa surface interne, la machine comprenant
un dispositif de formage de paraison (5) pour former une paraison tubulaire (4) possédant des nervures surélevées (407) sur une surface interne de celle-ci,
un dispositif de formage de nervure en spirale (100) comprenant une pince (105) pour serrer la paraison (4) suspendue à une filière (8) du dispositif de formage de paraison (5) après l'extrusion de la paraison (4) à partir de la filière (8), et un rotateur (107) pour faire tourner la pince (105) serrant la paraison (4) selon la direction circonférentielle de la paraison (4) afin de tordre la paraison (4) et les nervures surélevées (407) sur celle-ci selon la direction circonférentielle, et
un dispositif de formage de récipient pour gonfler la paraison (4) possédant les nervures en spirale (407) à partir de l'intérieur de celle-ci pour former un récipient (2),
ledit dispositif de formage de nervure en spirale (100) comprenant une base (101), une unité de formage de nervure en spirale (102) disposée sur la base (101), un mécanisme de transfert (103) qui déplace la base (101) ensemble avec l'unité de formage de nervure en spirale (102) selon les directions horizontale et verticale, un capteur (108) et un dispositif de commande (104) qui commande le déplacement de l'unité de formage de nervure en spirale (102) et du mécanisme de transfert (103).
